# FASCICULE DE BREVET EUROPEEN

(11) **EP 1 791 292 B1**
(45) Date de publication et mention de la délivrance du brevet: **02.01.2013**
(21) Numéro de dépôt: 06124596.5
(22) Date de dépôt: 22.11.2006
(51) Int. Cl.: H04L 9/32, G07F 7/10

(54) **Personnalisation d'un circuit électronique**
Personalisierung einer elektronischen Schaltung
Personalisation of an electronic circuit

(30) Priorité: 23.11.2005 FR 0553563
(43) Date de publication de la demande: 30.05.2007
(73) Titulaire: PROTON WORLD INTERNATIONAL N.V., 1930 Zaventem (BE)
(72) Inventeur: Huque, Thierry, 4280, Hannut (BE)
(74) Mandataire: de Beaumont, Michel

(56) Documents cités:
- WO-A-99/40549
- US-A1- 2003 098 775
- US-A1- 2004 144 840

## Description

### Domaine de l'invention

La présente invention concerne de façon générale les circuits électroniques d'authentification et/ou de chiffrement, par exemple contenus dans des cartes à puce.

Un exemple d'application de la présente invention concerne les cartes bancaires dont l'application principale est d'être utilisée comme moyen de paiement. Dans cette application, l'invention concerne plus particulièrement les cartes à puce dites EMV (Europay Mastercard Visa) dont le fonctionnement est normalisé et, parmi celles-ci, les cartes répondant aux standards EMV 4.0 et ultérieurs s'appliquant aux cartes à puce pourvues d'une fonction de chiffrement asymétrique (notamment RSA).

### Exposé de l'art antérieur

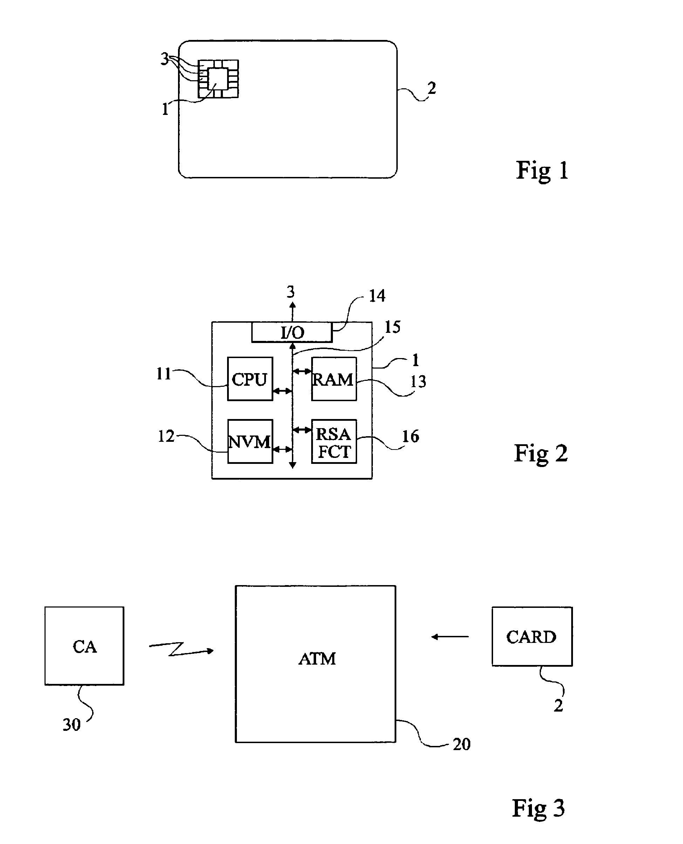

La figure 1 représente de façon très schématique un exemple de carte à puce du type auquel s'applique la présente invention. Une puce 1 de circuit intégré est encartée dans une carte 2 en matière plastique et est reliée à des contacts métalliques 3 pour communication avec un lecteur de carte non représenté. Dans les applications aux cartes bancaires, la carte communique avec contacts 3 avec le lecteur mais peut également être pourvue d'un système de communication sans contact, par exemple, pour d'autres applications.

La figure 2 représente, de façon très schématique et sous forme de blocs, des constituants d'un circuit intégré 1 constituant une puce d'une carte 2 de la figure 1. Le circuit ou la puce 1 comporte une unité centrale de traitement 11 (CPU), un ou plusieurs éléments 12 de mémorisation non volatiles (NVM), un ou plusieurs éléments de stockage volatil 13 (par exemple, de type RAM ou registres). Les différents constituants de la puce 1 communiquent entre eux et avec un dispositif 14 d'entrée/sortie (I/O) relié aux contacts 3 par un ou plusieurs bus 15 de données d'adresses et de commande.

L'invention s'applique aux circuits électroniques capables de mettre en oeuvre un algorithme de chiffrement asymétrique (dit aussi à clé publique). Cette fonctionnalité est illustrée en figure 2 par la présence d'un bloc 16 (RSA FCT) montrant que la puce intègre une fonction de type RSA (matérielle et/ou logicielle). L'algorithme RSA est un algorithme asymétrique consistant en une exponentiation modulaire du message à chiffrer en utilisant la clé comme exposant.

Dans les architectures à clés publiques, une fois que la paire de clés publique et privée ont été générées, la clé publique est certifiée par une autorité de certification ou tiers de confiance (CA ou Certification Authority).

La clé privée d'une entité émettrice est utilisée pour signer un message, c'est-à-dire générer un ensemble de bits appelé signature numérique, qui est fonction du message lui-même, et de la clé privée de l'entité. Le récepteur d'un message comprenant une signature numérique peut vérifier la signature en utilisant la clé publique de l'entité émettrice. Cela lui permet de s'assurer de l'origine du message. Il faut donc que le récepteur possède une copie de la clé publique de l'émetteur pour être en mesure de vérifier que le message provient bien de l'émetteur concerné.

D'autres systèmes à clés publiques ne se contentent pas de transmettre avec un message en clair, une signature servant à authentifier l'émetteur, mais chiffrent le message lui-même. La clé privée du récepteur lui sert alors à décoder (déchiffrer) le message émis, chiffré avec la copie de sa clé publique.

L'autorité de certification sert à fournir à un utilisateur, un certificat (message binaire) contenant la clé publique de cet utilisateur associée (le plus souvent concaténée) à d'autres informations concernant cet utilisateur (par exemple, un identifiant de l'utilisateur, une durée de validité de la clé, etc.) et à une signature numérique. La signature numérique attachée au certificat est calculée avec la clé privée de l'autorité de certification. L'autorité de certification fournit sa clé publique de façon séparée (généralement par d'autres moyens sécurisés) à un groupe d'utilisateurs concernés. Tout utilisateur en possession d'une copie de la clé publique de cette autorité de certification peut alors vérifier tous les certificats générés par cette autorité (vérifier la signature) et obtenir ainsi des copies de confiance de clés publiques d'autres utilisateurs.

Dans l'application aux cartes bancaires EMV, l'autorité de certification est le système bancaire qui génère des certificats pour tous les utilisateurs (établissements bancaires) en signant leurs clés publiques respectives (généralement en utilisant des clés différentes par ensemble de carte et/ou selon les établissements bancaires). Le système bancaire fournit alors sa ou ses clés publiques aux terminaux de paiement (acquéreurs) afin de leur permettre, quand une carte est introduite dans le terminal, de vérifier le certificat accompagnant la clé publique de la carte et obtenir une copie (certifiée) de cette clé publique dans laquelle il peut avoir confiance. Dans certains cas, les certificats ne contiennent que des données (pas de clé).

Des mécanismes de chiffrement symétrique (à clés secrètes) sont généralement également prévus et servent à authentifier les données échangées entre la carte et la banque émettrice, indépendamment de l'authentification effectuée par le mécanisme asymétrique. Dans un mécanisme symétrique, la même clé est utilisée pour chiffrer et déchiffrer les données, le récepteur doit donc posséder la clé secrète de l'émetteur. La transmission de cette clé peut faire appel à un chiffrement asymétrique.

Le plus souvent, l'utilisateur de la carte est authentifié par la carte par l'introduction de son code confidentiel (code PIN). Le code PIN est transmis à l'utilisateur par d'autres moyens (généralement un courrier postal) et seul le fournisseur de la carte le connaît.

Dans les systèmes récents auxquels s'applique plus particulièrement la présente invention, lorsqu'un terminal doit authentifier une carte, il utilise une authentification dite de données dynamiques (Dynamic Data Authentication - DDA) qui consiste à demander à la carte de signer avec sa clé privée un message variable (générée de façon pseudoaléatoire). Cela permet au terminal ayant obtenu la clé publique de la carte en décodant son certificat de vérifier qu'il s'agit bien de la bonne carte et non d'une carte contrefaite.

Les cartes bancaires de ce type sont de plus en plus souvent capables de traiter d'autres applications que l'application bancaire à laquelle elles sont initialement destinées. Il s'agit, par exemple, de consultations de soldes de comptes, de transactions bancaires autre que le paiement, etc. Ces autres applications n'ont pas nécessairement de lien avec le système bancaire. Il peut s'agir, par exemple, d'applications de cartes de fidélité, de cartes de transport, etc.

Le fait que la carte soit capable de mettre en oeuvre plusieurs applications requiert des mécanismes d'authentification distincts entre les applications bancaires EMV et les autres. Ces mécanismes d'authentification font appel à des algorithmes de chiffrement asymétriques (systèmes à clés publiques) et sont souvent désignés par applications PKI (Public Key Infrastructure).

Plus généralement, un circuit électronique d'authentification d'une carte à puce ou similaire doit de plus en plus souvent être capable d'authentifier la carte pour des applications différentes, pas nécessairement gérées par le même fournisseur d'application.

Cela requiert que la carte à puce contienne, non seulement les clés nécessaires à son authentification pour une application principale (par exemple, l'application EMV) mais également des clés pour chaque autre application secondaire (par exemple, PKI) qu'elle est susceptible de porter.

Un problème qui se pose est l'introduction, dans la carte (plus précisément dans son circuit intégré), de ces clés nécessaires par la suite à l'authentification par l'algorithme de chiffrement asymétrique (RSA ou autre). En particulier, il faut sécuriser la requête de certificat par la carte auprès de l'autorité de certification de l'application PKI, c'est-à-dire garantir que la clé publique reçue par l'autorité de certification PKI appartient bien au porteur de carte qui réclame un certificat.

Une première solution serait d'effectuer cette vérification lors de la fabrication en générant les clés dans la carte lors de la personnalisation dite de masse. Cette solution n'est toutefois pas envisageable en raison du temps requis pour générer des clés RSA (plusieurs secondes par clé pour des clés de 1024 bits). De plus, après la génération des clés, il serait nécessaire d'établir des communications sécurisées avec autant de tiers de confiance qu'il y a d'applications PKI, en plus de celle requise par l'application EMV, pour obtenir les certificats correspondants qui doivent être stockés dans la carte.

En outre, les porteurs de carte ont généralement une impression subjective que le fait que les clés d'authentification soient générées après la fabrication (alors qu'ils sont en possession de la carte) rend la procédure plus sûre.

La figure 3 illustre, de façon très schématique et sous forme de blocs, une solution classique adaptée à la génération des clés d'applications secondaires durant la vie de la carte. Cette solution consiste à avoir recours à un terminal 20 (ATM) de confiance capable de mettre en oeuvre divers mécanismes de contrôle, par exemple, la vérification de l'identifiant de la carte 2, la vérification du code PIN de celle-ci etc., pour authentifier le porteur de la carte et la liaison entre la clé et ce porteur. Le terminal 20 communique alors par une liaison sécurisée avec le tiers de confiance 30 (CA) de l'application PKI pour obtenir les certificats.

Un inconvénient d'une telle solution est qu'elle impose au porteur de carte voulant personnaliser une nouvelle application sur sa carte à se rendre dans un endroit spécifique disposant de terminaux dits de confiance.

Il serait souhaitable de pouvoir personnaliser des applications PKI dans des cartes à puce au moyen de lecteurs classiques (par exemple, du type lecteur de carte équipant un ordinateur personnel). Différents mécanismes de contrôle doivent alors être combinés mais se pose alors le problème que le terminal (ordinateur personnel) ne peut être considéré comme de confiance.

On aurait pu penser utiliser un code spécifique à usage unique (ONE TIME code) introduit dans la carte lors de la personnalisation et utilisé par le porteur de la carte comme un code PIN à usage unique. Un inconvénient d'une telle solution est son coût de mise en oeuvre car elle nécessiterait la mise en place, dans chaque carte, d'un programme spécifique pour un usage unique.

Le document US-A-2004/144840 décrit un procédé d'enregistrement et de vérification d'un certificat de carte à puce qui permet à un utilisateur de passer d'un domaine à un autre.

### Résumé de l'invention

Selon un premier aspect, la présente invention vise à pallier tout ou partie des inconvénients des solutions connues pour personnaliser des cartes bancaires pour des applications PKI.

L'invention vise plus particulièrement une solution adaptée aux cartes de paiement EMV disposant d'une fonction RSA.

L'invention vise également à proposer une solution ne requérant pas de modification structurelle d'une carte à puce existante.

Selon un deuxième aspect, la présente invention vise à permettre le transfert d'un certificat émis par une autorité de certification ou un tiers de confiance jusqu'à une carte à puce après génération de clés de chiffrement asymétriques sans que la carte ait besoin de se trouver dans un environnement sécurisé.

L'invention vise plus particulièrement la personnalisation d'une deuxième application dans un circuit électronique d'une carte à puce ou analogue par un mécanisme symétrique alors que cette application requiert une autorité de certification différente de celle d'une première application pour laquelle le circuit a été personnalisé préalablement.

La présente invention prévoit un procédé de personnalisation, dans un circuit électronique contenant une première application utilisant un mécanisme d'authentification asymétrique et une première autorité de certification, d'au moins une seconde application utilisant un mécanisme d'authentification asymétrique et une deuxième autorité de certification différente de la première, comportant des étapes de :
génération dans le circuit électronique d'une paire de clés publique et privée destinées à la deuxième application ; et
transmission à la deuxième autorité de certification et en utilisant un canal d'authentification de la première application, la clé publique de ladite paire pour obtenir un certificat de cette clé publique.

Selon un mode de mise en oeuvre de la présente invention, ledit circuit possède une paire de clés publique et privée dédiées à la première application, ledit procédé comportant des étapes de :
génération par le circuit électronique de ladite paire de clés publique et privée destinées à la deuxième application ;
signature numérique de la clé publique de la deuxième application par la clé privée de la première ;
transmission de la clé publique de la deuxième application et de ladite signature à la deuxième autorité de certification ; et
enregistrement dans le circuit d'un certificat fourni par la deuxième autorité de certification.

La présente invention prévoit également un circuit électronique.

La présente invention prévoit en outre un système de personnalisation de circuits électroniques pour plusieurs applications ayant recours à des autorités de certification différentes pour obtenir des certificats de clés publiques d'algorithmes d'authentification asymétriques.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente un exemple de carte à puce du type auquel s'applique la présente invention ;
la figure 2 qui a été décrite précédemment représente, de façon très schématique et sous forme de blocs, un exemple de puce de circuit intégré équipant une carte du type auquel s'applique la présente invention ;
la figure 3 qui a été décrite précédemment illustre, de façon très schématique et sous forme de blocs, un exemple classique de solution pour personnaliser des solutions PKI dans une carte à puce ;
la figure 4 représente, de façon très schématique, les échanges entre les constituants d'un système EMV du type auquel s'applique la présente invention, lors de la personnalisation d'une carte bancaire ;
la figure 5 représente les échanges entre les constituants d'un système selon un mode de réalisation de l'invention dans un mode de mise en oeuvre d'une phase de personnalisation d'une carte à puce selon la présente invention ; et
la figure 6 représente les échanges entre les constituants d'un système selon un mode de réalisation de l'invention dans un mode de mise en oeuvre du mécanisme d'authentification selon la présente invention.

Par souci de clarté, seuls les étapes et éléments qui sont utiles à la compréhension de l'invention ont été représentés aux figures et seront décrits par la suite. En particulier, les calculs effectués par l'algorithme asymétrique exploité par l'invention n'ont pas été exposés, l'invention étant compatible avec tout algorithme asymétrique classique. De plus, les applications PKI susceptibles d'être portées par une carte selon l'invention n'ont pas été non plus détaillées, l'invention étant là encore compatible avec toute application PKI classique susceptible d'être portée par une carte de paiement de type EMV.

### Description détaillée

La présente invention sera décrite en relation avec un exemple d'application de son premier aspect aux cartes bancaires de type EMV devant porter des applications de type PKI. Elle s'applique toutefois plus généralement dans un deuxième aspect à tout système de carte à puce ou d'élément électronique analogue, susceptible de porter plusieurs applications utilisant des mécanismes d'authentification asymétriques requérant des autorités de certification différentes. Par exemple, l'invention s'applique également à un circuit électronique contenu dans une clé USB à des fins d'autorisation d'accès ou à des modules contenus dans des ordinateurs personnels (PC), par exemple directement sur des cartes mère, pour authentifier les programmes exécutés.

Une caractéristique d'un mode de mise en oeuvre de la présente invention est d'authentifier la liaison entre la carte et l'autorité de certification (tiers de confiance) de personnalisation d'une application PKI (plus généralement d'une application seconde) en utilisant le mécanisme d'authentification EMV standard (plus généralement d'une application première). En d'autres termes, l'invention prévoit d'utiliser l'application EMV pour authentifier la carte lors de la personnalisation d'une application PKI.

Selon son premier aspect, l'invention tire profit du fait que les cartes à puce EMV pourvues d'une fonction RSA sont capables de mettre en oeuvre un mécanisme d'authentification de données dynamiques (DDA ou Dynamique Data Authentication). Ce mécanisme est utilisé par le terminal de l'application EMV pour authentifier la carte et son porteur. L'invention prévoit d'utiliser ce mécanisme pour transmettre, à une autorité de certification d'application PKI, une clé destinée à cette application générée par la carte bancaire.

Plus généralement et selon son deuxième aspect, l'invention prévoit d'utiliser un canal d'authentification d'une première application pour authentifier un circuit électronique en vue d'une personnalisation pour une deuxième application faisant appel à une autorité de certification différente de celle de la première.

Pour simplifier la description qui suit, les différents échanges ont été supposés en clair (non chiffrés). En pratique, dans la plupart des cas, l'algorithme asymétrique sert non seulement pour authentifier la carte mais également pour chiffrer les données transmises. Par exemple, l'algorithme asymétrique est utilisé pour transmettre une clé d'un algorithme symétrique utilisé par la suite pour chiffrer les échanges entre deux éléments.

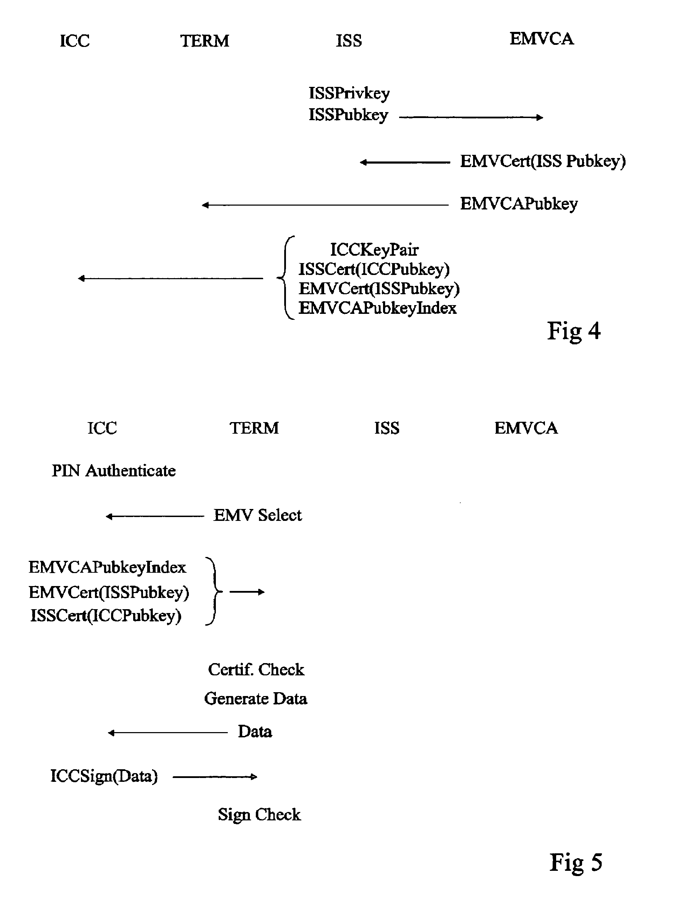

La figure 4 représente, de façon très schématique, les échanges entre les différents éléments d'un système EMV du type auquel s'applique la présente invention, lors de la personnalisation d'une carte bancaire.

Le fournisseur ISS (Issuer) de la carte (en pratique, l'établissement bancaire) génère une paire de clés publique ISSPubKey et privée ISSPrivKey et envoie sa clé publique à une autorité EMVCA de certification EMV pour obtenir un certificat EMVCert(ISSPubKey) d'authenticité pour sa propre clé publique ISSPubKey. Ce certificat est signé par la clé privée EMVCAPrivKey de l'autorité de certification EMV. Il n'est donc vérifiable qu'en utilisant la clé publique EMVCAPubKey correspondante de cette autorité.

De façon indépendante, l'autorité de certification EMV fournit à tous les terminaux TERM susceptibles de traiter les cartes concernées sa ou ses clés publiques EMVCAPubKey.

Lors de la personnalisation d'une carte ICC, le fournisseur de la carte choisit des données de la carte considérées comme essentielles, par exemple, le numéro d'identification de la carte, du compte bancaire à laquelle elle est attachée, etc.

Puis, le fournisseur ISS génère :
une paire (ICCKeyPair) de clés publique (ICCPubKey) et privée (ICCPrivKey) de chiffrement asymétrique pour la carte ; et
un certificat d'authenticité ISSCert(ICCPubKey) pour la clé publique de la carte. Seul un possesseur de la clé publique ISSPubKey sera en mesure d'obtenir la signature correcte de la clé ICCPubKey de la clé publique de la carte.

Enfin, le fournisseur transmet à la carte pour stockage dans une mémoire non volatile :
la paire ICCKeyPair de clés de la carte ;
le certificat ISSCert(ICCPubKey) ;
son propre certificat EMVCert(ISSPubKey) fourni par l'autorité de certification EMV ; et
un index EMVCAPubKeyIndex de la clé publique EMVCAPubKey de l'autorité de certification. Cet index est en fait un identifiant de la clé publique qui devra être utilisée pour la carte concernée. Il sert aux terminaux pour connaître l'autorité de certification à laquelle est affiliée la carte. Le terminal possède en effet généralement plusieurs clés publiques de différentes autorités pour être en mesure de traiter des cartes de provenances différentes.

La carte bancaire est alors distribuée à son porteur qui reçoit en parallèle (généralement par courrier postal) le code PIN de la carte qui lui permettra par la suite de s'identifier comme porteur autorisé de la carte correspondante.

La figure 5 illustre les échanges entre les différents éléments d'un système de cartes bancaires de type EMV lors d'une transaction bancaire, mettant en oeuvre un mécanisme d'authentification de données dynamiques.

Lorsque la carte est introduite dans un terminal TERM du réseau correspondant, c'est-à-dire un terminal possédant la clé publique EMVCAPubKey de l'autorité de certification, le terminal s'assure de l'authenticité de la carte en effectuant les opérations suivantes.

Le terminal commence par demander à la carte de vérifier (PIN Authenticate) le code PIN saisie par le porteur afin de vérifier que celui-ci est bien autorisé.

Le terminal donne instruction à la carte de sélectionner (EMV Select) son application EMV. Puis, il lit dans la carte des données d'identification parmi lesquelles :
l'index EMVCAPubKeyIndex de clé publique de l'autorité de certification ;
le certificat EMVCert(ISSPubKey) contenant la clé publique du fournisseur, signé par la clé privée EMVCAPrivKey de l'autorité de certification EMV ; et
le certificat ISSCert(ICCPubKey) contenant la clé publique de la carte, signé par la clé privée ISSPrivKey du fournisseur.

Le terminal sélectionne alors la clé publique EMVCAPubKey de l'autorité de certification identifiée à partir de l'index EMVCAPubKeyIndex lu dans la carte et utilise cette clé pour vérifier (Certif. Check) le certificat EMVCert(ISSPubKey) du fournisseur. En cas de conformité entre la signature présente dans le certificat et celle recalculée par le terminal, la clé publique du fournisseur ISSPubKey présente dans le certificat est considérée comme valide.

Cette clé ISSPubKey sert au terminal pour vérifier (Certif. Check) le certificat ISSCert(ICCPubKey), pour valider la clé publique ICCPubKey de la carte qu'il contient.

Le terminal est alors en possession de la clé publique de la carte ICC et il sait que cette carte provient bien du fournisseur ISS et est bien authentifiée par l'autorité EMV.

Le terminal envoie à la carte une demande de signature d'un message contenant des données dynamiques (Data), par exemple, générées de façon pseudoaléatoire (generate Data).

Lorsqu'elle reçoit ces données, la carte les signe en utilisant sa clé privée ICCPrivKey. Cela revient à exécuter un algorithme de chiffrement asymétrique (en pratique l'algorithme RSA) sur les données Data.

Le message chiffré ICCSign (Data) est envoyé au terminal qui vérifie alors (Sign Check) l'authenticité de la carte en vérifiant l'identité de signatures entre celle reçue de la carte et une signature qu'il calcule (ou qu'il a calculé pendant que la carte en faisait de même) en utilisant la clé publique ICCPubKey. La clé ICCPubKey obtenue peut alors être considérée comme de confiance grâce à la vérification de la chaîne de certificats.

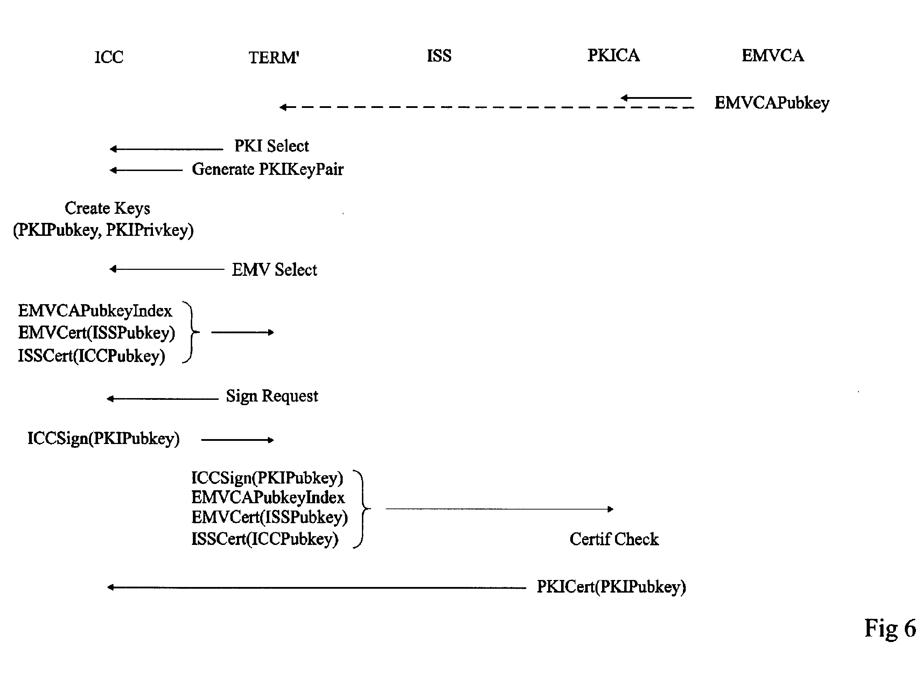

La figure 6 illustre un mode de mise en oeuvre d'une phase de personnalisation d'une carte à puce pour une autre application dite PKI que l'application EMV.

Selon ce mode de mise en oeuvre, de façon indépendante de la personnalisation des cartes, qui s'effectue comme décrit ci-dessus en relation avec la figure 4, l'autorité de certification EMV (EMV CA) distribue sa clé publique EMVCAPubKey à toutes les autorités de certifications (PKI CA) des applications PKI susceptibles de traiter des applications sur des cartes de son réseau. L'autorité EMV n'envoie sa clé publique qu'aux terminaux bancaires destinés à porter l'application EMV. Les autres terminaux ne disposent donc pas de cette clé. Il peut s'agir de lecteurs de carte associés à un ordinateur personnel, à une borne de carte de fidélité d'un magasin, etc.

Une première phase consiste, pour un terminal TERM' d'application PKI, à authentifier la clé publique de l'application PKI.

Le terminal commence par envoyer à la carte une instruction de sélectionner son application PKI (Select PKI Application).

Puis, il demande à la carte ICC de générer (Generate PKIKeyPair) une paire PKIKeyPair de clés de chiffrement RSA pour cette application PKI. Lorsqu'elle reçoit cette instruction, la carte crée (Create Keys) des clés publique PKIPubKey et privée PKIPrivKey de l'application PKI.

En parallèle ou postérieurement, le terminal donne instruction à la carte de sélectionner son application EMV. Puis, comme pour une transaction EMV classique, il lit dans la carte des données d'identification parmi lesquelles :
l'index EMVCAPubKeyIndex de clé publique de l'autorité de certification ;
le certificat EMVCert(ISSPubKey) contenant la clé publique du fournisseur, signé par la clé (privée) de l'autorité de certification EMV ; et
le certificat ISSCert(ICCPubKey) contenant la clé publique de la carte, signé par la clé (privée) du fournisseur.

Le terminal envoie alors à la carte une demande (Sign Request) de signature d'un message. Cependant, à la différence d'une transaction classique, le terminal demande à la carte de signer la clé publique PKIPubKey de l'application PKI qu'elle vient de générer. Le message contient au moins l'identifiant de la clé et, dans cet exemple, la clé elle-même (le cas échéant complétée par des données pseudoaléatoires).

Lorsqu'elle reçoit cette instruction, la carte signe, en utilisant sa clé privée ICCPrivKey (liée à l'application EMV) la clé publique PKIPubKey au moyen de l'algorithme RSA.

Le message signé ICCSign(PKIPubKey) est envoyé au terminal. A la différence d'une transaction EMV, le terminal n'est ici pas forcément capable de vérifier la signature opérée par la carte. En effet, s'il ne s'agit pas d'un terminal EMV, il ne dispose pas du certificat fourni par l'autorité de certification EMV (contenant la clé publique EMVCAPubKey qui serait nécessaire pour décoder le certificat EMVCert(ISSPubKey) afin d'obtenir la clé ICCPubKey).

Le terminal envoie à l'autorité PKICA de certification de l'application PKI une demande de certificat de la clé publique PKIPubKey en lui transmettant :
la clé publique signée ICCSign(PKIPubKey) par la carte ICC - Le cas échéant (par exemple, si la clé d'application PKI est trop grande), la clé PKIPubKey est transmise en plus de la signature ICCSign(PKIPubKey) de cette clé générée par l'application EMV ;
l'index EMVCAPubKeyIndex contenant la clé publique de l'autorité de certification ;
le certificat EMVCert(ISSPubKey) contenant la clé publique du fournisseur de la carte ; et
le certificat ISSCert(ICCPubKey) contenant la clé publique de la carte.

L'autorité de certification de l'application PKI qui possède la clé EMVCAPubKey vérifie (Certif. Check) la chaîne des certificats en :
vérifiant le certificat EMVCert(ISSPubKey) avec la clé EMVCAPubKey pour vérifier la clé ISSPubKey ; et
vérifiant le certificat ISSCert(ICCPubKey) avec la clé ISSPubKey obtenue pour vérifier la clé ICCPubKey.

Puis, en utilisant la clé publique ICCPubKey, l'autorité de certification de l'application PKI est capable de vérifier la signature ICCSign(PKIPubKey) afin d'obtenir ou de vérifier la clé publique PKIPubKey créée par la carte.

L'autorité de certification de l'application PKI génère alors, avec sa clé privée PKICAPrivKey, un certificat PKICert(PKIPubKey) pour cette clé publique PKIPubKey.

Ce certificat est alors transmis au terminal TERM' pour écriture dans la carte.

Une fois en possession du certificat PKICert(PKIPubKey), la carte est en possession d'une paire de clés d'application PKI authentifiées par l'autorité de certification PKI.

A titre de variante, le fournisseur de l'application PKI, ici supposé confondu avec l'autorité de certification PKI, ne possède pas la clé publique EMVCAPubKey de l'application EMV. Dans ce cas, l'autorité de certification de l'application PKI fait suivre le certificat EMVCert(ISSPubKey) à l'autorité de certification EMV qui décode la clé PKIPubKey pour la retransmettre au fournisseur de l'application PKI chargée de fournir le certificat PKICert(PKIPubKey). Selon une autre variante, l'autorité de certification de l'application EMV a conservé la paire de clés de la carte générée lors de la personnalisation de l'application EMV. Il n'est alors pas nécessaire de faire remonter les certificats EMVCert(ISSPubKey) et ISSCert(ICCPubKey).

Selon une autre variante applicable au cas où le terminal est un terminal de confiance (ATM), ce dernier vérifie la chaîne de certificats et envoie à l'autorité de certification PKI, la clé publique PKIPubKey.

La mise en oeuvre de l'invention dans son application préférée aux systèmes EMV peut utiliser une commande existante de ces systèmes. Il s'agit d'une commande spécifique d'authentification interne (Internal Auth) à la carte dont le format contient (norme EMV 2000) :
un octet CLA de paramétrage de la commande contenant classiquement 00 ;
un octet INS contenant classiquement 88 ;
deux octets P1 et P2 contenant classiquement 00 et 00 ; et
un champ de données Data destiné à contenir des données d'authentification.

Selon ce mode de mise en oeuvre de l'invention :
L'octet CLA est utilisé pour indiquer que la commande Internal Auth est la commande spéciale de l'invention (données à signer correspondant à la clé et non à des données reçues du terminal), par exemple 90 pour la norme ISO 7816-4 ; et
   selon la taille de l'identifiant de clé, soit les octets P1 et P2 contiennent un identifiant de clé, soit le champ Data est utilisé pour transmettre l'identifiant de clé.
   une signature de la clé publique d'application PKI de la carte est alors envoyée dans une variable de données dynamique ICC Dynamic Data qui contient :

un octet ;
un octet ATC non modifié par l'invention ;
un octet donnant l'état (valide ou non) du code PIN saisi par l'utilisateur ; et
un champ contenant la signature calculée de la clé PKIPubKey. De préférence, cette signature est calculée par une fonction de condensat (hashing function) de type SHA-1.

Toutefois d'autres commandes disponibles peuvent être utilisées, notamment dans le cadre plus général de l'invention selon son deuxième aspect.

Un avantage de la présente invention est qu'elle permet de faire générer des clés d'applications PKI par les cartes bancaires, en authentifiant celles-ci par l'application EMV. Plusieurs clés pour une même application PKI ou pour des applications PKI différentes (faisant appel si besoin à des autorités de certification PKI différentes) peuvent être générées de la même manière.

Un autre avantage de la présente invention est que cette génération ne requiert pas l'utilisation de terminaux dédiés aux applications bancaires (terminaux EMV). En effet, pour la personnalisation des applications PKI, le terminal ne fait que transmettre les clés publiques de l'application EMV dans des certificats qu'il est incapable de déchiffrer. S'il ne s'agit pas d'un terminal bancaire, il ne possède aucune clé publique d'application EMV.

Un autre avantage de la présente invention est qu'elle est compatible avec les utilisations classiques des applications PKI. En particulier, une fois certifiée par l'autorité de l'application PKI, la clé publique (donc la paire de clés publique et privée) contenue dans la carte peut être utilisée de façon classique, tout terminal d'application PKI possédant la clé publique PKICAPubKey de l'autorité de certification de cette application est en mesure de décoder le certificat PKICert(PKIPubKey) que lui transmet la carte pour être ensuite en mesure de décoder des données chiffrées par la carte avec sa clé privée PKIPrivKey de l'application.

Selon le deuxième aspect de l'invention, la procédure exposée en relation avec une application EMV d'authentification de la carte pour personnaliser une application PKI est appliquée entre une première application (par exemple PKI) et une deuxième application (par exemple PKI) ayant un tiers de confiance différent de la première. La seule condition est que ces deux applications mettent en oeuvre un algorithme asymétrique.

Bien entendu, la présente invention est susceptible de diverses variantes et modifications qui apparaîtront à l'homme de l'art. En particulier, la mise en oeuvre pratique de l'invention en utilisant des moyens matériels et/ou logiciels classiques d'une carte à puce est à la portée de l'homme du métier.

De plus, bien que l'invention ait été décrite en relation avec l'utilisation de l'algorithme RSA, elle s'applique plus généralement à tout algorithme asymétrique, par exemple, ceux basés sur des courbes elliptiques.

## Revendications

1. Procédé de personnalisation, dans un circuit électronique (1) contenant une première application utilisant un mécanisme d'authentification asymétrique et une première autorité de certification, d'au moins une seconde application utilisant un mécanisme d'authentification asymétrique et une deuxième autorité de certification différente de la première, **caractérisé en ce qu'**il comporte des étapes de :
génération dans le circuit électronique d'une paire de clés publique et privée destinées à la deuxième application ; et
transmission à la deuxième autorité de certification et en utilisant un canal d'authentification de la première application, la clé publique de ladite paire pour obtenir un certificat de cette clé publique.

2. Procédé de personnalisation selon la revendication 1, dans lequel ledit circuit (1) possède une paire de clés publique et privée dédiées à la première application, ledit procédé comportant des étapes de :
génération par le circuit électronique de ladite paire de clés publique et privée destinées à la deuxième application ;
signature numérique de la clé publique de la deuxième application par la clé privée de la première ;
transmission de la clé publique de la deuxième application et de ladite signature à la deuxième autorité de certification ; et
enregistrement dans le circuit d'un certificat fourni par la deuxième autorité de certification.

3. Circuit électronique (1), **caractérisé en ce qu'**il comporte des moyens pour la mise en oeuvre du procédé selon l'une quelconque des revendications 1 ou 2.

4. Système de personnalisation de circuits électroniques (1) pour plusieurs applications ayant recours à des autorités de certification différentes pour obtenir des certificats de clés publiques d'algorithmes d'authentification asymétriques, **caractérisé en ce qu'**il comporte des moyens pour mettre en oeuvre le procédé selon la revendication 1 ou 2.

## Claims

1. A method for customizing, in an electronic circuit (1) containing a first application using an asymmetrical authentication algorithm and a first certification authority, at least a second application using an asymmetrical authentication algorithm and a second certification authority different from the first one, said method comprising steps of:
having the electronic circuit generate a pair of public and private keys intended for the second application; and
transmitting to the second certification authority, using an authentication channel of the first application, the public key of said pair to obtain a certificate of this public key.

2. The customization method of claim 1, wherein said circuit (1) has a pair of public and private keys dedicated to the first application, said method comprising steps of:
generation by the electronic circuit of said pair of public and private keys intended for the second application;
digital signature of the public key of the second application by the private key of the first one;
transmission of the public key of the second application and of said signature to the second certification authority; and
recording in the circuit of a certificate provided by the second certification authority.

3. An electronic circuit (1), comprising means for implementing the method of claim 1 or 2.

4. A system of customization of electronic circuits (1) for several applications using different certification authorities to obtain certificates of public keys of asymmetrical authentication algorithms, comprising means for implementing the method of claim 1 or 2.

## Patentansprüche

1. Verfahren zur Nutzeranpassung in einer elektronischen Schaltung (1), die eine erste Anwendung enthält, die einen asymmetrischen Authentifizierungsalgorithmus und eine erste Zertifizierungsstelle verwendet, sowie zumindest eine zweite Anwendung, die einen asymmetrischen Authentifizierungsalgorithmus und eine zweite Zertifizierungsstelle verwendet, die sich von der ersten unterscheidet, wobei das Verfahren die folgenden Schritte aufweist:
Veranlassen der elektronischen Schaltung ein Paar von öffentlichen und privaten Schlüsseln zu erzeugen, die für die zweite Anwendung bestimmt sind; und
Übertragen an die zweite Zertifizierungsstelle unter Verwendung eines Authentifizierungskanals der ersten Anwendung, des öffentlichen Schlüssels des Paars, um ein Zertifikat dieses öffentlichen Schlüssels zu erhalten.

2. Nutzeranpassungsverfahren gemäß Anspruch 1, wobei die Schaltung (1) ein Paar von öffentlichen und privaten Schlüsseln besitzt, die der ersten Anwendung zugewiesen sind, wobei das Verfahren die folgenden Schritte aufweist:
Erzeugen durch die elektronische Schaltung von einem Paar von öffentlichen und privaten Schlüsseln, die für die zweite Anwendung bestimmt sind;
digitale Signatur des öffentlichen Schlüssels der zweiten Anwendung durch den privaten Schlüssel der ersten Anwendung;
Übertragen des öffentlichen Schlüssels der zweiten Anwendung und der Signatur an die zweite Zertifizierungsstelle; und
Aufzeichnen in der Schaltung eines Zertifikats, das durch die zweite Zertifizierungsstelle vorgesehen wird.

3. Elektronische Schaltung (1), die Mittel zum Implementieren des Verfahrens der Ansprüche 1 oder 2 aufweist.

4. System der Nutzeranpassung von elektronischen Schaltungen (1) für mehrere Anwendungen unter Verwendung unterschiedlicher Zertifizierungsstellen, um Zertifikate öffentlicher Schlüssel asymmetrischer Authentifizierungsalgorithmen zu erhalten, welches Mittel zum Implementieren des Verfahrens der Ansprüche 1 oder 2 aufweist.
